# EUROPEAN PATENT SPECIFICATION

(11) **EP 3 358 903 B1**
(45) Date of publication and mention of the grant of the patent: **11.03.2026**
(21) Application number: 16860062.5
(22) Date of filing: 28.06.2016
(51) Int. Cl.: H04W 72/0453, H04W 72/541, H04W 74/0808

(54) **WIRELESS SIGNAL TRANSMISSION APPARATUS AND METHOD FOR USING NON-LICENSED BAND**
DRAHTLOSE SIGNALÜBERTRAGUNGSVORRICHTUNG UND VERFAHREN ZUR VERWENDUNG EINES NICHTLIZENZIERTEN BANDES
APPAREIL DE TRANSMISSION DE SIGNAL SANS FIL ET PROCÉDÉ PERMETTANT D'UTILISER UNE BANDE SANS LICENCE

(30) Priority: 30.10.2015 KR 20150152029
(43) Date of publication of application: 08.08.2018
(73) Proprietor: SK Telecom Co., Ltd., Seoul 04539 (KR)
(72) Inventor: CHOI, Chang-soon, Seoul 04539 (KR); NA, Minsoo, Seoul 04539 (KR)
(74) Representative: Isarpatent
(86) International application number: PCT/KR2016/006902
(87) International publication number: WO 2017/073878

(56) References cited:
- EP-B1- 3 202 208
- WO-A1-2015/083914
- WO-A2-2012/124949
- US-A1- 2014 269 550
- US-A1- 2015 222 410
- BROADCOM CORPORATION: "Issues for a High Performance Unlicensed Spectrum Access Protocol for 5G", vol. TSG RAN, no. Phoenix; 20150917 - 20150918, 17 September 2015 (2015-09-17), XP051017194, Retrieved from the Internet <URL:http://www.3gpp.org/ftp/Meetings_3GPP_SYNC/WORKSHOP/Docs/> [retrieved on 20150917]
- ALCATEL -LUCENT ET AL.: "Channel Selection for LAA", R1-150194, 3GPP TSG RAN WG1 MEETING #80, 18 February 2015 (2015-02-18), Athens, Greece, XP050933408
- ERICSSON ET AL.: "Study on Licensed-assisted Access Using LTE", RP-141664, 3GPP TSG RAN MEETING #65, 12 September 2014 (2014-09-12), Edinburgh, Scotland, XP068081907

## Description

### [Technical Field]

The present disclosure in some embodiments relates to an apparatus and a method of transmitting a radio signal for using an unlicensed band.

### [Background]

The statements in this section merely provide background information related to the present disclosure and do not necessarily constitute prior art.

The frequency bands in which radio signals are used are divided into licensed bands and unlicensed bands. The license band is a frequency band authorized by the country by telecommunications carriers paying expenses. The unlicensed band is a frequency band available for free use at no cost requiring no authorization from the country. The 5 gigahertz (GHz) band out of the unlicensed band is mainly used by Wireless Fidelity (WiFi) signals.

3GPP and other standardization bodies are in recent discussions of license-assisted access (LAA) technology using unlicensed bandwidth to transmit Long Term Evolution (LTE) signals for the 4th generation mobile communication. The LAA technology is a wireless transmission technology that aggregates carriers of the license band and of the unlicensed band and uses the unlicensed band as the supplementary band. LAA is discussed in Broadcom Corp.: "Issues for a High Performance Unlicensed Spectrum Access Protocol for 5G", 3GPP TSG RAN 5G Workshop, Phoenix, AZ, Sept. 17-18, 2015. Further, EP 3 202 208 A1 , cited under Art. 54(3) EPC, relates to techniques for transmitting channel usage beacon signals over an unlicensed radio frequency spectrum band. Document US 2015/222410 A1 discloses another example of the prior art.

When a communication carrier transmits a long-term evolution signal using an unlicensed band, interference occurring in the unlicensed band between the Wi-Fi signal and the long-term evolution signal becomes an issue. The interference between signals is overshadowed by inability to transmit wireless LAN signals. These deficiencies are due to the different communication methods used between the Wi-Fi signal and the long-term evolution signal.

The communication of the Wi-Fi signal uses a Carrier Sense Multiple Access (CSMA) scheme in order to suppress competition for limited radio resources. This method detects, before transmitting a signal, a carrier wave and checks whether a channel is occupied or not. If the channel is in use, it holds a transmission of radio signal, and if the channel is not in use, performs the transmission. This method is also called a listen before talk (LBT) scheme.

The communication of long-term evolution signals uses an Orthogonal Frequency Division Multiplexing (OFDM) scheme. In this scheme, a signal is modulated into a plurality of narrowband subcarriers orthogonal to each other, which are then multiplexed. Without a channel detecting process, multiple users can transmit radio signals at the same time. Therefore, as long as the long-term evolution signal uses the channel, the Wi-Fi signal has to wait, failing to make a radio transmission.

In order to solve these deficiencies, telecommunications carriers attempt to use the license-assisted access (LAA) method to transmit long-term evolution signals using unlicensed bandwidth. Here, the License-Assisted Access method is an application of the listen before talk (LBT) scheme to the long-term evolution (LTE) signals.

Telecommunications carriers are trying to use signals of the 5th generation mobile communication, at its commencement of standardization, in the unlicensed band. However, there is an obstacle to using the 5th generation mobile communication signal immediately in the unlicensed band. The maximum frequency bandwidth of the 4th generation mobile communication signal is narrower than or equal to that of the Wi-Fi signal. Whereas, the maximum frequency bandwidth of the 5th generation mobile communication signal is likely to be wider than or equal to that of the Wi-Fi signal.

The license-assisted access (LAA) method is implemented on the premise that the maximum frequency bandwidth of the mobile communication signal is narrower than or equal to that of the Wi-Fi signal, and it cannot process the mobile communication signal with the wider maximum frequency band than the Wi-Fi signal.

No radio signal transmission apparatus and method for using the unlicensed band have been implemented yet to solve the above-mentioned deficiencies.

### [Disclosure]

### [Technical Problem]

The inventors of the present disclosure recognize the problem that using an unlicensed band between the radio signals having different maximum frequency bandwidths causes narrowband interference between the radio signals, and seek to apply the license-assisted access method to only part of the radio signal, which has wide maximum frequency bandwidth.

Embodiments of the present disclosure select some channels that may include the maximum frequency bandwidth of a radio signal from among a plurality of channels in the unlicensed band, and apply the license-assisted access method to some channels, and thereby effectively avoid the narrow band interference between the Wi-Fi signals and the radio signals having the maximum frequency bandwidth wider than that of the Wi-Fi signals.

Other objects not described in the present disclosure can be further considered within the range that can easily be deduced from the detailed description below and its effects.

### [Summary]

An aspect of the present embodiment provides a radio signal transmission apparatus according to independent claim 1.

Another aspect of the present disclosure provides a method according to independent claim 10.

### [Advantageous Effects]

As described above, according to some embodiments of the present disclosure, some channels can be selected that may include the maximum frequency bandwidth of the radio signal from among a plurality of channels of the unlicensed band, and the license-assisted access method can be applied to some channels, and thereby effectively avoid the narrow band interference between the Wi-Fi signals and the radio signals having the maximum frequency bandwidth wider than that of the Wi-Fi signals.

Embodiments of the present disclosure can apply the License-Assisted Access method to some channels among a plurality of channels of the unlicensed band, by selecting some channels that may include the maximum frequency bandwidth of the radio signal.

According to some embodiments of the present disclosure, by applying the license-assisted access method to some channels selected from a plurality of channels of the unlicensed band concurrently or nonconcurrently, the narrow band interference between the Wi-Fi signals and the radio signals may be effectively avoided where radio resources are variable.

While using some channels, embodiments of the present disclosure make a second determination of whether other channels are available and use the other available channels, and thereby utilize a plurality of channels efficiently timewise.

Some embodiments of the present disclosure make a second determination of whether used channels are available and reuse the available channels used or notify a radio resource scheduling unit of the channel status information, thereby effecting the maximized efficiency of use of the radio resources.

Other effects that are explained or suggested below in the specification and their tentative effects are included, even though not explicitly stated in this section.

### [Brief Description of the Drawings]

FIG. 1 is a block diagram of a radio signal transmission apparatus according to at least one embodiment of the present disclosure.
FIG. 2 is a flowchart of a radio signal transmission method according to at least one embodiment of the present disclosure.
FIGS. 3 to 6 are diagrams illustrating a plurality of channels in a second frequency band according to at least one embodiment of the present disclosure.

### REFERENCE NUMERALS

100: Radio signal transmission apparatus
200: Radio signal reception apparatus
110: Channel selection unit
120: Available channel determination unit
130: Radio signal transmission unit
300, 400, 500, 600: Channel information of the second frequency band from the perspective of a first radio signal
320, 420, 520, 620: Channel information of the second frequency band from the perspective of a second radio signal
310, 410, 510, 610: Orthogonal frequency division multiplexing subcarriers

### [Detailed Description]

Hereinafter, some embodiments of the present disclosure will be described in detail with reference to the accompanying drawings with a detailed description of known functions and configurations incorporated herein being omitted for the purpose of clarity and for brevity.

The embodiments described herein may be used in a wireless communication system.

The wireless communication system includes at least one base station (BS) and at least one terminal (User Equipment or UE). Each base station provides a communication service to a cell which is a specific geographical area. The cell may be subdivided into sectors which are a large number of regions. The communication from the base station to the terminal is called a downlink communication or simply downlink, and the communication from the terminal to the base station is called an uplink communication or simply uplink.

A base station is a station that communicates with a terminal and can be referred to as another name such as an evolved-Node B (eNB), a base transceiver system (BTS) and an access point.

A terminal is an apparatus which communicates with a network, and it may be referred to by another name including a mobile station (MS), a mobile terminal, a user terminal (UT), a subscriber station (SS), a wireless device, a portable information terminal (Personal Digital Assistant or PDA), a wireless modem and a handheld device among others.

Various multiple access transmission technologies may be applied to the wireless communication system. Multiple-access is a technology for multiple users to jointly use code, frequency, time, space, etc. Multiple-access may be divided into a fixed allocation approach and a dynamic allocation approach.

Examples of fixed allocation approaches include Code Division Multiple Access (CDMA), Frequency Division Multiple Access (FDMA), Time Division Multiple Access (TDMA), Orthogonal Frequency Division Multiple Access (OFDMA) scheme, and the like, but the present disclosure is not limited thereto.

An example of the dynamic allocation approach is Carrier Sense Multiple Access (CSMA) method, but the present disclosure is not limited thereto.

Various duplexing technologies for bidirectional communication may be applied to the wireless communication system. Examples of duplexing technologies include but not limited to frequency division duplexing (FDD), time division duplexing (TDD), and the like.

A multiple antenna technology may be applied to the wireless communication system. Based on the configuration of the antennas, multi-antenna types may be classified into single-input (source transmitter) single-output (destination receiver) (SISO), single-input multiple-output (SIMO), multiple-input single-output (MISO) and multiple-input multiple-output (MIMO). The input transmit antenna refers to a physical or logical antenna used to transmit a single signal or stream. The output receive antenna means a physical or logical antenna used to receive a single signal or stream.

A wireless communication system may use a single bandwidth for signal transmission. For example, the second generation mobile communication signal uses a bandwidth of from 200 kilohertz (kHz) to 1.25 megahertz (MHz). The third generation mobile communication signal uses a bandwidth of from 5 MHz to 10 MHz. The 4th generation mobile communication signal uses 20 MHz.

When a wireless communication system is to transmit a mobile communication signal in a frequency band in which a wireless LAN signal is transmitted, interference may occur between the mobile communication signal and a wireless LAN signal. In particular, when the bandwidth of the mobile communication signal is different from that of the wireless LAN signal, it is necessary to provide a radio signal transmission apparatus for effectively dealing with the narrow band interference due to the difference in the bandwidth.

Hereinafter, a radio signal transmission apparatus capable of effectively taking care of interference between a mobile communication signal and a wireless LAN signal will be described. Here, the radio signal transmission apparatus may be implemented as a part of a wireless communication system.

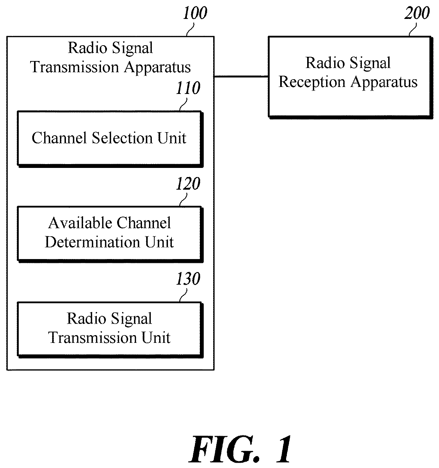

FIG. 1 is a block diagram illustrating a radio signal transmission apparatus according to an embodiment of the present disclosure. As shown in FIG. 1, the radio signal transmission apparatus 100 according to at least one embodiment includes a channel selection unit 110, an available-channel determination unit 120, a radio signal transmission unit 130.

The radio signal transmission apparatus 100 is a device that transfers a radio signal, for example, a mobile communication signal, to a radio signal reception apparatus 200. The radio signal transmission apparatus 100 is linked with the radio signal reception apparatus 200. The radio signal transmission apparatus 100 may be a base station of a wireless communication system, and the radio signal reception apparatus 200 may be a terminal of a wireless communication system, and vice versa. For convenience of explanation, the process of downlink transmission of the radio signal by the radio signal transmission apparatus 100 will be described as an example, but it is also applicable to the uplink transmission.

The radio signal transmission apparatus 100 transmits a radio signal having a first maximum frequency bandwidth (hereinafter referred to as a first radio signal) by using the first frequency band or the second frequency band or both. The radio signal transmission apparatus 100 selects several channels from a plurality of channels in the second frequency band, and applies the license-assisted access (LAA) scheme to some channels. This enables to avoid interference between the first radio signal and a radio signal having a second maximum frequency bandwidth (hereinafter referred to as a second radio signal).

The first radio signal is a fourth generation mobile communication signal or a fifth generation mobile communication signal, and the second radio signal is a wireless LAN (Wireless Fidelity or Wi-Fi) signal.

The first radio signal may operate by an orthogonal frequency division multiplexing (OFDM) scheme in the first frequency band or the second frequency band or both, and the second radio signal may operate by a carrier sense multiple access (CSMA) scheme in the second frequency band, but they are not limited to this.

The first frequency band may be, but not limited to, a licensed band, and the second frequency band may be, but not limited to, an unlicensed band that is the 5 gigahertz (GHz) band.

The first maximum frequency bandwidth is wider than or equal to the second maximum frequency bandwidth. For example, although not limited thereto, the first maximum frequency bandwidth may be 100 MHz and the second maximum frequency bandwidth may be 20 MHz.

The channel selection unit 110 is configured to select some channels from a plurality of channels in the second frequency band. The channel selection unit 110 selects, from the plurality of channels, M channels (M is a natural number) that compose at least some of the first maximum frequency bandwidth. For example, five channels may be selected when the first maximum frequency bandwidth is 100 MHz and the bandwidth of a channel is 20 MHz. Meanwhile, the channel selection unit 110 may also select one to four channels.

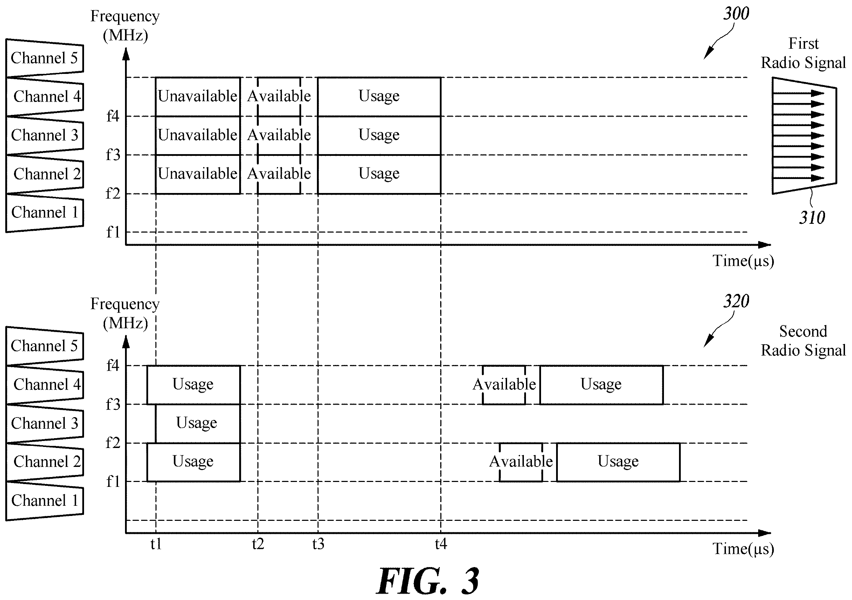

From the plurality of channels in the second frequency band, the channel selection unit 110 selects M consecutive channels (M is a natural number) that compose at least some of the first maximum frequency bandwidth. For example, referring to FIG. 3, continuous channels 2 to 4 may be selected from consecutive channels 1 to 5. Alternatively, the selection unit 110 may select a discontinuous channel. For example, it may select discontinuous channel 1, channel 3, and channel 4 from the continuous channels 1 to 5.

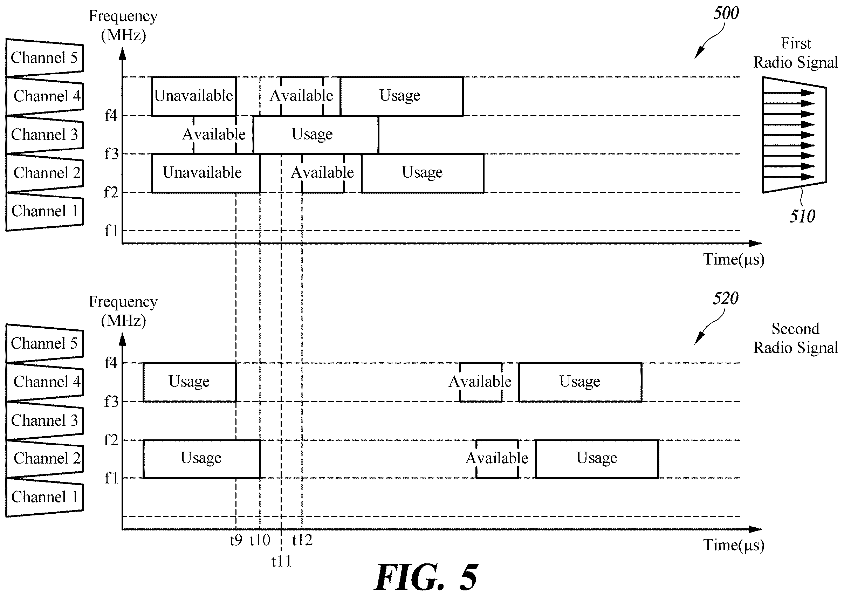

An available channel determination unit 120 is adapted to determine whether or not a channel is available for use out of a plurality of channels in the second frequency band. The available channel determination unit 120 determines whether or not at least one channel of the selected M channels is in use by the first radio signal or the second radio signal. The available channel determination unit 120 determines concurrently or nonconcurrently whether at least one channel is being used. For example, referring to FIG. 3, the available channel determination unit 120 may determine whether three channels (channels 2 to 4) are being used by a first radio signal or a second radio signal concurrently (at time t2). On the other hand, referring to FIG. 5, the available channel determination unit 120 may make determination on the channels 4 and 2 nonconcurrently (at time t11 and at time t12), respectively.

In case where the first radio signal fails to use at least one channel, the available channel determination unit 120 determines that at least one channel is in use by the second radio signal or the second radio signal after a preset available channel determination period.

An available channel determination period is the period for redetermining whether or not a channel is in use. The available channel determination cycle is set in advance. The available channel determination period may be an arbitrary numerical value estimated based on the communication data or a numerical value according to the technical provision. The available channel determination period may be changed as a numerical value set according to the design of the system. For example, referring to FIG. 5, the available channel determination period is the time span from time t9 to time t11. The time span from time t9 to time t11 may be set to be longer than or equal to 20 µs, but it is not limited thereto.

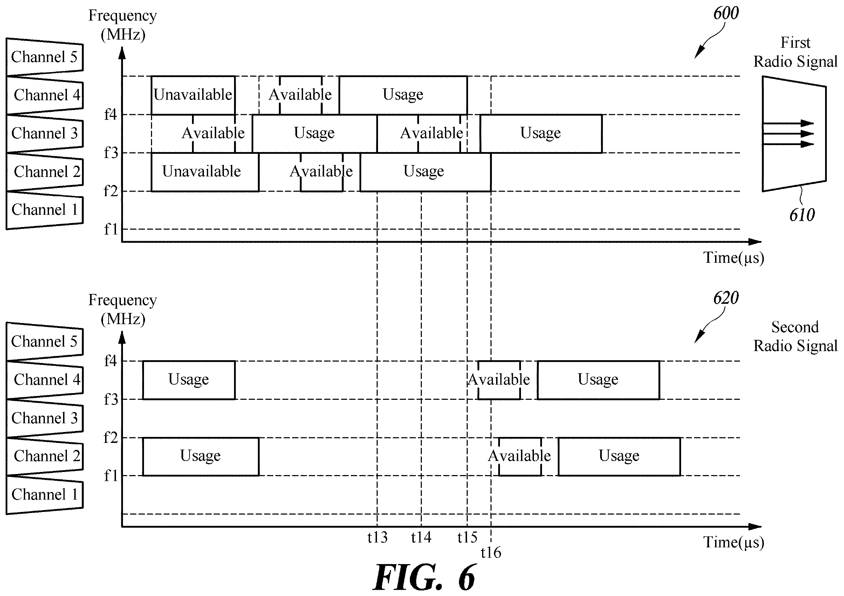

In case where the first radio signal is to successively or intermittently use the very channel that it used for its transmission, the available channel determination unit 120 may determine whether at least one channel is being used by the first radio signal or the second radio signal after a preset channel usage time. For example, referring to FIG. 6, when channel 3, after being used for the transmission of the first radio signal, is to be successively used, the available channel determination unit 120 may determine whether channel 3 is in use by the first radio signal or the second radio signal.

The channel usage time is the time set so that the first radio signal or the second radio signal may use the channel. The channel usage time is preset. The channel usage time may be an arbitrary numerical value estimated based on the communication data or a numerical value according to the relevant technical provision. The channel usage time may be changed as a numerical value set according to the design of the system. For example, referring to FIG. 3, the channel usage time is the time span from time t3 to time t4. The time from time t3 to time t4 may be set from 1 millisecond (ms) to 10 ms, although the present disclosure is not limited thereto.

The radio signal transmission unit 130 is adapted to transmit the first radio signal to the radio signal reception apparatus 200 by using at least one channel of the plurality of channels of the second frequency band or the first frequency band or both. When at least one channel of the second frequency band is not in use by the first radio signal and the second radio signal, the radio signal transmission unit 130 transmits the first radio signal to the radio signal reception apparatus 200. The radio signal transmission unit 130 utilizes the at least one channel of the second frequency band or the first frequency band or both as determined by the usable channel determination unit 120 to transmit the first radio signal to the radio signal reception apparatus 200.

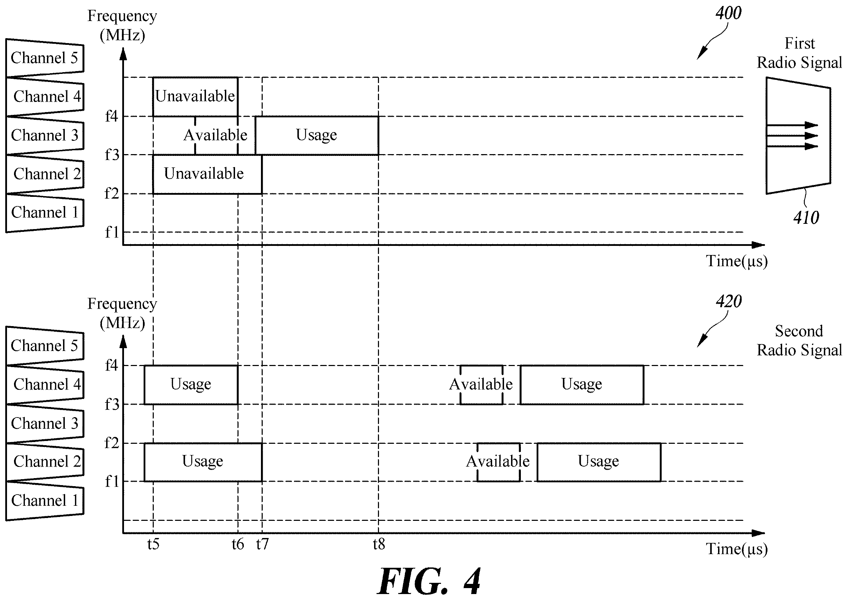

As shown in FIG. 3, three channels (channels 2 to 4) are in use by neither the first radio signal nor the second radio signal at time t2, when the radio signal transmission unit 130 may transmit the first radio signal to the radio signal reception apparatus by using the first frequency band and the three channels (the channels 2 to 4). Or, as shown in FIG. 4, the radio signal transmission unit 130 may transmit the first radio signal to the radio signal reception apparatus by using the first frequency band and one channel (channel 3).

The radio signal transmission unit 130 may transmit the first radio signal to the radio signal reception apparatus by aggregating carriers of the first frequency band and/or at least one channel of the second frequency band. Carrier aggregation (CA) is a technology of establishing an increased bandwidth by aggregating one or more component carriers (CCs) having a bandwidth narrower than the wider bandwidth to be provided. Carrier aggregation may be employed between homogeneous or heterogeneous networks. For example, it may be employed between a Long Term Evolution (LTE) frequency and another Long Term Evolution (LTE) frequency, or between a Long Term Evolution (LTE) frequency and a Wireless LAN (Wi-Fi) frequency, although not limited thereto.

The radio signal transmission unit 130 may transmit the first radio signal to the radio signal reception apparatus by using the first frequency band and/or subcarriers of at least one channel. The subcarriers are based on the Orthogonal Frequency Division Multiplexing (OFDM) method. For example, referring to FIGS. 3 to 6, the radio signal transmission unit 130 may use the orthogonal frequency division multiplexing (OFDM) subcarriers (310, 410, 510 and 610) to transmit the first radio signal.

The radio signal transmission apparatus 100 may further include a radio resource scheduling unit (not shown).

The radio resource scheduling unit is provided for optimally allocating limited radio resources to a plurality of users in a cell at each time. The radio resource scheduling unit schedules a resource block by using states of the multiple channels of the first frequency band and/or the multiple channels in the second frequency band. Resource blocks are classified by frequency and time into lattices, and are divided into subblocks. Various scheduling methods may be applied to the radio resource scheduling unit for optimally allocating resource blocks to the multiple users.

In case where the first radio signal is to successively use the same channel as it used for the transmission thereof, the available channel determination unit 120 may inform the radio resource scheduling unit of the state of at least one determined channel. For example, referring to FIG. 6, in the case of successively using channel 3 that was used for the transmission of the first radio signal, the available channel determination unit 120 may provide the status information of channel 3 to the radio resource scheduling unit.

Some embodiments of the present disclosure select some channels that may include the maximum frequency bandwidth of the radio signal from among a plurality of channels of the unlicensed band, and provide the license-assisted access (LAA) to some channels, and thereby effectively avoid the narrow band interference between the Wi-Fi signal and the radio signal having the maximum frequency bandwidth wider than that of the Wi-Fi signal.

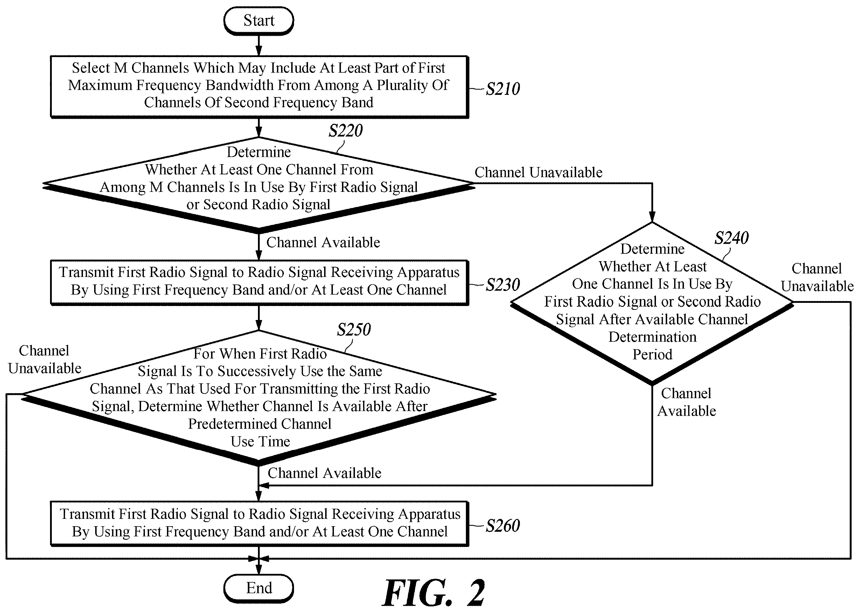

The following will describe the operation of the radio signal transmission apparatus 100 according to at least one embodiment of the present disclosure. FIG. 2 is a flowchart illustrating a radio signal transmission method according to at least one embodiment of the present disclosure. Referring to FIGS. 3 and 4, Steps S210 through S230 and will be described, and Steps S240 and S260 will be described with reference to FIG. 5, and Steps S250 and S260 will be described with reference to FIG. 6.

In FIG. 3 at 300 and 320, there are illustrated information on channels of the second frequency band over time. Reference numeral 300 denotes channel information of a second frequency band from the perspective of a first radio signal, and reference numeral 320 denotes channel information of the second frequency band from the perspective of a second radio signal. For convenience of explanation, channel information of the second frequency band is divided by reference numerals 300 and 320, but this indicates the same second frequency band.

The first maximum frequency bandwidth may be wider than or equal to the second maximum frequency bandwidth. For convenience of explanation, it is illustrated that the first maximum frequency bandwidth is 60 MHz and the second maximum frequency bandwidth is 20 MHz as an example, although the values of the first and second maximum frequency bandwidths are not limited thereto.

The second frequency band has a plurality of channels. The plurality of channels includes, but not limited to, example channels 1 to 5. The bandwidth of each channel may be 20 MHz, although not limited thereto. Frequencies f1 to f4 exemplify the frequencies that are boundaries of the respective channels of the second frequency band.

In Step S210, the radio signal transmission apparatus 100 selects, from among the plurality of channels of the second frequency band, M channels (M is a natural number) that compose at least a part of the first maximum frequency bandwidth. Referring to FIG. 3, the radio signal transmission apparatus 100 may select channels 2 to 4 from channel 1 to channel 5 at time t1.

Thereby, the radio signal transmission apparatus 100 selects some channels for composing the maximum frequency bandwidth of the radio signal from among the plurality of channels of the unlicensed band, thereby allowing the license-assisted access method to be applied to the selected channels.

In Step S220, the radio signal transmission apparatus 100 determines concurrently or nonconcurrently whether at least one channel among the M channels is used by the first radio signal or the second radio signal. Referring to FIG. 3, the radio signal transmission apparatus 100 may determine whether the channels 2 to 4 are used at time t1. In FIG. 3, the radio signal transmission apparatus 100 may determine whether channels 2 to 4 are being used at time t2.

In Step S230, unless at least one channel is in use by the first radio signal or the second radio signal, the radio signal transmission apparatus 100 transmits the first radio signal to the radio signal reception apparatus by using the first frequency band or at least one channel of the second frequency band or both. Referring to FIG. 3, channels 2 to 4 are not used at time t2, so that the first radio signal may use channels 2 to 4 from time t3 to time t4. The time span from time t3 to time t4 is the channel usage time which may be set to be 1 ms to 10 ms, although not limited thereto.

In Step S230, the radio signal transmission apparatus 100 may transmit the first radio signal by using the first frequency band and/or subcarriers 310 of channels 2 to 4 of the second frequency band. The subcarrier 310 based on orthogonal frequency division multiplexing may be used for transmission of the first radio signal. After time t4, upon determining, by the apparatus for transmitting the second radio signal, whether channels 2 and 4 are available for use, the second radio signal uses channel 2 and channel 4.

As a result, the radio signal transmission apparatus 100 selects some channels that may include the maximum frequency bandwidth of the radio signal from among the plurality of channels in the unlicensed band, thereby permitting the license-assisted access method to be applied to the selected channels.

Different from the information on the channels of the second frequency band described with reference to FIG. 3, the information on the channels of the second frequency band exemplified in FIG. 4 illustrates a case where the radio signal transmission apparatus 100 determines nonconcurrently whether a plurality of channels is usable or not, and utilizes only some channels.

Referring to FIG. 4, the radio signal transmission apparatus 100 may determine whether the channel 2 and the channel 4 are used at time t5. From time t5 to time t6, channels 2 and 4 are used by the second radio signal. On the other hand, channel 3 is not used from time t5 to time t6 by the second radio signal.

Referring to FIG. 4, as a result of Step S220 determining the positive availability of channel 2 from among channels 2 to 4 because it is not in use by the first radio signal or the second radio signal, the radio signal transmission apparatus 100 may transmit the first radio signal by using the channel 2. The time span from time t7 to time t8 is the channel usage time which may be set to be 1 ms to 10 ms, although not limited thereto.

Referring to FIG. 4, in Step S230, the radio signal transmission apparatus 100 may transmit the first radio signal by using the first frequency band and/or the subcarrier 410 of channel 2 of the second frequency band. The subcarrier 410 based on orthogonal frequency division multiplexing may be used for transmission of the first radio signal.

As a result, the radio signal transmission apparatus 100 applies concurrently or nonconcurrently the license-assisted access method to some channels selected from a plurality of channels of the unlicensed band, whereby the narrow band interference can be effectively avoided between the radio signal and the Wi-Fi signal where wireless resources are variable.

In Step S240, in case where the first radio signal has not used at least one channel, the radio signal transmission apparatus 100 determines whether at least one channel is in use after a preset available channel determination period by the first radio signal or the second radio signal.

In Step S260, in case where at least one channel is not used by the first radio signal or the second radio signal, the radio signal transmission apparatus 100 transmits the first radio signal to the radio signal reception apparatus by using the first frequency band and/or at least one channel of the second frequency band. On the other hand, when at least one channel is being used by the first radio signal or the second radio signal, the radio signal transmission apparatus 100 does not use such channel that it considered in determining the channel availability for transmitting the first radio signal.

Different from the information on the channels of the second frequency band described with reference to FIG. 4, the information on the channels of the second frequency band exemplified in FIG. 5 represents that the radio signal transmission apparatus 100 uses the channel it has missed to use after redetermining the availability thereof.

Referring to FIG. 5, channel 4 is used by the second radio signal up until time t9, and channel 2 is used by the second radio signal up to time t10. The radio signal transmission apparatus 100 redetermines whether or not the channel 4 is used at time t11. The radio signal transmission apparatus 100 redetermines whether or not the channel 2 is being used at time t12. The time span from time t9 to time t11 and the time span from time t10 to time t12 may be set as the usable channel determination period, such as 20 µs or more, although not limited thereto. Although not shown in FIG. 5, when the channel 2 is used by the second radio signal at time t12, the radio signal transmission apparatus 100 does not use channel 2 in transmitting the first radio signal.

Referring to FIG. 5, the radio signal transmission apparatus 100 in Step S260, may transmit the first radio signal by using the first frequency band and/or the subcarrier 510 of channel 2 to channel 4. The subcarrier 510, which is based on orthogonal frequency division multiplexing, may be used for transmission of the first radio signal. When Step S240 determines the availability of channel 2 and channel 4 concluding that channel 2 or channel 4 is used by the first radio signal or the second radio signal, the radio signal transmission apparatus 100 does not use channel 2 and channel 4, which are being used.

As a result, while using some channels to transmit the first radio signal, the radio signal transmission apparatus 100 redetermines whether another channel is available and uses the same, thereby efficiently using multiple channels in terms of time.

In Step S250, when the first radio signal is to successively use the same channel as that was used for its own transmission, the radio signal transmission apparatus 100 determines whether at least one channel is being used by the first radio signal or the second radio signal after a preset channel usage time.

In Step S260, when at least one channel is not being used by the first radio signal or the second radio signal, the radio signal transmission apparatus 100 transmits the first radio signal to the radio signal reception apparatus by using the first frequency band and/or at least one channel of the second frequency band. When Step S250 determines the availability of channel 3 concluding it is used by the first radio signal or the second radio signal, the radio signal transmission apparatus 100 does not use channel 3 considered in determining the channel availability for transmitting the first radio signal.

Different from the information on the channels of the second frequency band described with reference to FIG. 5, the information on the channels of the second frequency band exemplified in FIG. 6 illustrates a case where the radio signal transmission apparatus 100 redetermines the availability of the channel used once and uses the same.

Referring to FIG. 6, channel 3 is used by the first radio signal up until time t13, channel 4 is used by the first radio signal up to time t15, and channel 2 is used by the first radio signal up to time t16. The radio signal transmission apparatus 100 may redetermine whether or not the channel 3 is used at time t14 after time t13. Here, time t13 is when the channel usage time is terminated.

As a result, the radio signal transmission apparatus 100 redetermines whether or not the channel it used is available to reuse the same or notify the wireless resource scheduling unit of the channel condition information, thereby maximizing the efficiency of using radio resources.

Although FIG. 2 illustrates that the respective steps as being sequentially performed, it merely instantiates a technical idea of some embodiments of the present disclosure. Therefore, a person having ordinary skill in the pertinent art could appreciate that various modifications, additions, and substitutions are possible by changing the sequence illustrated in FIG. 2 or by performing two or more steps in parallel.

The term "unit" or "device" herein used may refer to various apparatuses including all or some of a communication apparatus such as a communication modem for communicating with various devices or wired/wireless communication network, a memory for storing data for executing a program, a microprocessor or the like for executing a program to perform operations and commands. Here, the "unit" or "device" may be implemented in logic circuitry by hardware, firmware, software, or a combination thereof, and may be implemented using a general purpose or special purpose computer. "Unit" or "device" may be implemented by using a hardwired device, a field programmable gate array (FPGA), an application specific integrated circuit (ASIC). In addition, "unit" or "apparatus" may be implemented as a System on Chip (SoC) including one or more processors and controllers.

## Claims

1. A radio signal transmission apparatus (100) for using a first frequency band or a second frequency band or both while avoiding interference between a first radio signal that is a fourth generation mobile communication signal or a fifth generation mobile communication signal having a first maximum frequency bandwidth and a second radio signal that is a wireless fidelity, WiFi, signal having a second maximum frequency bandwidth, wherein the first maximum frequency bandwidth is wider than or equal to the second maximum frequency bandwidth, the radio signal transmission apparatus (100) comprising:
a channel selection unit (110) configured to select, from a plurality of channels in the second frequency band, M channels that compose at least a part of the first maximum frequency bandwidth, wherein M is a natural number;
an available channel determination unit (120) both configured to determine concurrently and configured to determine nonconcurrently whether at least one channel of the M channels is being occupied by the first radio signal or the second radio signal at a specific time; and
a radio signal transmission unit configured to transmit the first radio signal to a radio signal reception apparatus (200) by using the first frequency band or the at least one channel of the second frequency band or both at a subsequent time of the specific time when the at least one channel is being occupied by neither the first radio signal nor the second radio signal at the specific time;
wherein the selected M channels are consecutive in the second frequency band; and
wherein, while using some channels to transmit the first radio signal, the radio signal transmission unit is configured to redetermine whether another previously used channel in the second frequency band is available and to use the other channel to transmit the first radio signal.

2. The radio signal transmission apparatus (100) of claim 1, wherein
the second maximum frequency bandwidth is 20 megahertz,
the second frequency band is an unlicensed band of 5 gigahertz and
the second radio signal is transmitted in the second frequency band by a Carrier Sense Multiple Access, CSMA, method.

3. The radio signal transmission apparatus (100) of claim 1, wherein
the available channel determination unit (120) is configured to determine concurrently whether or not the M channels are being occupied by the first radio signal or the second radio signal at the specific time, and
the radio signal transmission unit is configured to transmit the first radio signal at the subsequent time of the specific time to the radio signal reception apparatus (200) by carrier aggregation of the first frequency band and the M channels, when the M channels are being occupied by neither the first radio signal nor the second radio signal at the specific time.

4. The radio signal transmission apparatus (100) of claim 1, wherein
when the first radio signal has missed to use the at least one channel, the available channel determination unit (120) is configured to determine whether the at least one channel is being occupied by the first radio signal or the second radio signal after a preset available channel determination period.

5. The radio signal transmission apparatus (100) of claim 1, wherein
when the first radio signal is to successively or intermittently use the same channel as has been previously used for transmitting the first radio signal, the available channel determination unit (120) is configured to determine whether the at least one channel is in use by the first radio signal or the second radio signal at the specific time after a preset channel usage time.

6. The radio signal transmission apparatus (100) of claim 1, further comprising:
a radio resource scheduling unit configured to schedule a resource block based on states of a plurality of channels of the first frequency band or the plurality of channels of the second frequency band or both.

7. The radio signal transmission apparatus (100) of claim 6, wherein
when the first radio signal is to successively use the same channel as used for transmission of the first radio signal, the available channel determination unit (120) is configured to inform the radio resource scheduling unit of the state of the at least one channel.

8. The radio signal transmission apparatus (100) of claim 1, wherein the radio signal transmission unit is configured to transmit the first radio signal at the subsequent time of the specific time to the radio signal reception apparatus (200) by carrier aggregation of the first frequency band or the at least one channel or both.

9. The radio signal transmission apparatus (100) of claim 1, wherein the radio signal transmission unit is configured to transmit the first radio signal to the radio signal reception apparatus (200) by using the first frequency band or a subcarrier of the at least one channel or both.

10. A method of transmitting, by a radio signal transmission apparatus (100), a radio signal, for using a first frequency band or a second frequency band or both while avoiding interference between a first radio signal that is a fourth generation mobile communication signal or a fifth generation mobile communication signal having a first maximum frequency bandwidth and a second radio signal that is a wireless fidelity, WiFi, signal having a second maximum frequency bandwidth, wherein the first maximum frequency bandwidth is wider than or equal to the second maximum frequency bandwidth, the method comprising:
selecting, from a plurality of channels in the second frequency band, M channels that compose at least a part of the first maximum frequency bandwidth, wherein M is a natural number;
determining concurrently or nonconcurrently whether at least one channel of the M channels is being occupied by the first radio signal or the second radio signal at specific time; and
transmitting the first radio signal to a radio signal reception apparatus (200) by using the first frequency band or the at least one channel of the second frequency band or both at a subsequent time of the specific time when the at least one channel is being occupied by neither the first radio signal nor the second radio signal at the specific time;
wherein the selected M channels are consecutive in the second frequency band; and
wherein the method further comprises the step of redetermining, while using some channels to transmit the first radio signal, whether another previously used channel in the second frequency band is available and using the other channel to transmit the first radio signal.

11. The method of claim 10, further comprising:
when the first radio signal has missed to use the at least one channel, determining whether the at least one channel is being occupied by the first radio signal or the second radio signal at the specific time after a preset available channel determination period.

12. The method of claim 10, further comprising:
when the first radio signal is to successively or intermittently use the same channel as used for transmitting the first radio signal, determining whether the at least one channel is being occupied by the first radio signal or the second radio signal after a preset channel usage time.

13. The method of claim 11, further comprising:
when the at least one channel is being occupied by neither the first radio signal nor the second radio signal, transmitting the first radio signal to the radio signal reception apparatus (200) by using the first radio signal or the at least one channel or both.

## Patentansprüche

1. Funksignalübertragungsvorrichtung (100) zum Verwenden eines ersten Frequenzbandes oder eines zweiten Frequenzbandes oder beider, während Interferenzen zwischen einem ersten Funksignal, das ein Mobilkommunikationssignal der vierten Generation oder ein Mobilkommunikationssignal der fünften Generation mit einer ersten maximalen Frequenzbandbreite ist, und einem zweiten Funksignal, das ein Wireless Fidelity (WiFi)-Signal mit einer zweiten maximalen Frequenzbandbreite ist, vermieden werden, wobei die erste maximale Frequenzbandbreite breiter oder gleich der zweiten maximalen Frequenzbandbreite ist, wobei die Funksignalübertragungsvorrichtung (100) umfasst:
eine Kanalauswahleinheit (110), die eingerichtet ist, um aus mehreren Kanälen in dem zweiten Frequenzband M Kanäle auszuwählen, die mindestens einen Teil der ersten maximalen Frequenzbandbreite bilden, wobei M eine natürliche Zahl ist;
eine Verfügbarer-Kanal-Bestimmungseinheit (120), die sowohl eingerichtet ist, um gleichzeitig zu bestimmen, als auch eingerichtet ist, um nicht gleichzeitig zu bestimmen, ob mindestens ein Kanal der M Kanäle zu einem bestimmten Zeitpunkt durch das erste Funksignal oder das zweite Funksignal belegt ist; und
eine Funksignalübertragungseinheit, die eingerichtet ist, um das erste Funksignal an eine Funksignalempfangsvorrichtung (200) zu übertragen, indem sie das erste Frequenzband oder den mindestens einen Kanal des zweiten Frequenzbands oder beide zu einem Zeitpunkt nach dem bestimmten Zeitpunkt verwendet, zu dem der mindestens eine Kanal weder von dem ersten Funksignal noch von dem zweiten Funksignal zu dem bestimmten Zeitpunkt belegt ist;
wobei die ausgewählten M Kanäle in dem zweiten Frequenzband aufeinanderfolgen; und
wobei die Funksignalübertragungseinheit eingerichtet ist, um während der Verwendung einiger Kanäle zur Übertragung des ersten Funksignals erneut zu bestimmen, ob ein anderer zuvor verwendeter Kanal in dem zweiten Frequenzband verfügbar ist, und um den anderen Kanal zu verwenden, um das erste Funksignal zu übertragen.

2. Funksignalübertragungsvorrichtung (100) nach Anspruch 1, wobei
die zweite maximale Frequenzbandbreite 20 Megahertz beträgt,
das zweite Frequenzband ein nicht lizenziertes Band von 5 Gigahertz ist und
das zweite Funksignal in dem zweiten Frequenzband durch ein Carrier Sense Multiple Access (CSMA)-Verfahren übertragen wird.

3. Funksignalübertragungsvorrichtung (100) nach Anspruch 1, wobei
die Verfügbarer-Kanal-Bestimmungseinheit (120) eingerichtet ist, um gleichzeitig zu bestimmen, ob die M Kanäle zu dem bestimmten Zeitpunkt durch das erste Funksignal oder das zweite Funksignal belegt sind, und
die Funksignalübertragungseinheit eingerichtet ist, um das erste Funksignal zu dem Zeitpunkt nach dem bestimmten Zeitpunkt durch Trägeraggregation des ersten Frequenzbands und der M Kanäle an die Funksignalempfangsvorrichtung (200) zu übertragen, wenn die M Kanäle zu dem bestimmten Zeitpunkt weder durch das erste Funksignal noch durch das zweite Funksignal belegt sind.

4. Funksignalübertragungsvorrichtung (100) nach Anspruch 1, wobei,
wenn das erste Funksignal versäumt hat, den mindestens einen Kanal zu verwenden, die Verfügbarer-Kanal-Bestimmungseinheit (120) eingerichtet ist, um zu bestimmen, ob der mindestens eine Kanal nach einer voreingestellten Dauer zur Bestimmung verfügbarer Kanäle durch das erste Funksignal oder das zweite Funksignal belegt ist.

5. Funksignalübertragungsvorrichtung (100) nach Anspruch 1, wobei,
wenn das erste Funksignal nacheinander oder intermittierend denselben Kanal verwenden soll, wie er zuvor zum Übertragen des ersten Funksignals verwendet wurde, die Verfügbarer-Kanal-Bestimmungseinheit (120) eingerichtet ist, um zu bestimmen, ob der mindestens eine Kanal zu einem bestimmten Zeitpunkt nach einer voreingestellten Kanalnutzungszeit von dem ersten Funksignal oder von dem zweiten Funksignal in Verwendung ist.

6. Funksignalübertragungsvorrichtung (100) nach Anspruch 1, ferner umfassend:
eine Funkressourcen-Planungseinheit, die eingerichtet ist, um einen Ressourcenblock basierend auf Zuständen mehrerer Kanäle des ersten Frequenzbands oder mehrerer Kanäle des zweiten Frequenzbands oder beider zu planen.

7. Funksignalübertragungsvorrichtung (100) nach Anspruch 6, wobei,
wenn das erste Funksignal nacheinander denselben Kanal verwendet werden soll, wie er zur Übertragung des ersten Funksignals verwendet wurde, die Verfügbarer-Kanal-Bestimmungseinheit (120) eingerichtet ist, um die Funkressourcen-Planungseinheit über den Zustand des mindestens einen Kanals zu informieren.

8. Funksignalübertragungsvorrichtung (100) nach Anspruch 1, wobei die Funksignalübertragungseinheit eingerichtet ist, um das erste Funksignal zu dem Zeitpunkt nach dem bestimmten Zeitpunkt durch Trägeraggregation des ersten Frequenzbands oder des mindestens einen Kanals oder beider an die Funksignalempfangsvorrichtung (200) zu übertragen.

9. Funksignalübertragungsvorrichtung (100) nach Anspruch 1, wobei die Funksignalübertragungseinheit eingerichtet ist, um das erste Funksignal unter Verwendung des ersten Frequenzbands oder eines Unterträgers des mindestens einen Kanals oder beider an die Funksignalempfangsvorrichtung (200) zu übertragen.

10. Verfahren zum Übertragen eines Funksignals durch eine Funksignalübertragungsvorrichtung (100) zum Verwenden eines ersten Frequenzbandes oder eines zweiten Frequenzbandes oder beider, während Interferenzen zwischen einem ersten Funksignal, das ein Mobilkommunikationssignal der vierten Generation oder ein Mobilkommunikationssignal der fünften Generation mit einer ersten maximalen Frequenzbandbreite ist, und einem zweiten Funksignal, das ein Wireless Fidelity (WiFi)-Signal mit einer zweiten maximalen Frequenzbandbreite ist, vermieden werden, wobei die erste maximale Frequenzbandbreite breiter oder gleich der zweiten maximalen Frequenzbandbreite ist, wobei das Verfahren umfasst:
Auswählen von M Kanälen aus mehreren Kanälen in dem zweiten Frequenzband, die mindestens einen Teil der ersten maximalen Frequenzbandbreite bilden, wobei M eine natürliche Zahl ist;
Bestimmen gleichzeitig oder nicht gleichzeitig, ob mindestens ein Kanal der M Kanäle zu einem bestimmten Zeitpunkt durch das erste Funksignal oder das zweite Funksignal belegt ist; und
Übertragen des ersten Funksignals an eine Funksignalempfangsvorrichtung (200), indem sie das erste Frequenzband oder den mindestens einen Kanal des zweiten Frequenzbands oder beide zu einem Zeitpunkt nach dem bestimmten Zeitpunkt verwendet, zu dem der mindestens eine Kanal weder von dem ersten Funksignal noch von dem zweiten Funksignal zu dem bestimmten Zeitpunkt belegt ist;
wobei die ausgewählten M Kanäle in dem zweiten Frequenzband aufeinanderfolgen; und
wobei das Verfahren ferner den Schritt eines erneuten Bestimmens, während einige Kanäle zum Übertragen des ersten Funksignals verwendet werden, ob ein anderer zuvor verwendeter Kanal in dem zweiten Frequenzband verfügbar ist, und ein Verwenden des anderen Kanals zum Übertragen des ersten Funksignals umfasst.

11. Verfahren nach Anspruch 10, ferner umfassend:
wenn das erste Funksignal versäumt hat, den mindestens einen Kanal zu verwenden, Bestimmen zu dem Zeitpunkt nach einer voreingestellten Dauer zur Bestimmung verfügbarer Kanäle, ob der mindestens eine Kanal durch das erste Funksignal oder das zweite Funksignal belegt ist.

12. Verfahren nach Anspruch 10, ferner umfassend:
wenn das erste Funksignal nacheinander oder intermittierend denselben Kanal verwenden soll, wie er zum Übertragen des ersten Funksignals verwendet wurde, Bestimmen, ob der mindestens eine Kanal nach einer voreingestellten Kanalnutzungszeit durch das erste Funksignal oder das zweite Funksignal belegt ist.

13. Verfahren nach Anspruch 11, ferner umfassend:
wenn der mindestens eine Kanal weder von dem ersten Funksignal noch von dem zweiten Funksignal belegt ist, Übertragen des ersten Funksignals an die Funksignalempfangsvorrichtung (200) unter Verwendung des ersten Funksignals oder des mindestens einen Kanals oder beider.

## Revendications

1. Appareil de transmission de signaux radio (100) pour utiliser une première bande de fréquences ou une seconde bande de fréquences, ou les deux, tout en évitant des interférences entre un premier signal radio qui est un signal de communication mobile de quatrième génération ou un signal de communication mobile de cinquième génération ayant une première largeur de bande de fréquences maximale, et un second signal radio qui est un signal d'accès sans fil, WiFi, ayant une seconde largeur de bande de fréquences maximale, dans lequel la première largeur de bande de fréquences maximale est plus large ou égale à la seconde largeur de bande de fréquences maximale, l'appareil de transmission de signaux radio (100) comprenant :
une unité de sélection de canaux (110) configurée pour sélectionner, parmi une pluralité de canaux dans la seconde bande de fréquences, M canaux qui composent au moins une partie de la première largeur de bande de fréquences maximale, dans lequel M est un entier naturel ;
une unité de détermination de canal disponible (120) à la fois configurée pour déterminer de manière simultanée et configurée pour déterminer de manière non simultanée si au moins un canal parmi les M canaux est occupé par le premier signal radio ou le second signal radio à un instant spécifique ; et
une unité de transmission de signaux radio configurée pour transmettre le premier signal radio à un appareil de réception de signaux radio (200) en utilisant la première bande de fréquences ou l'au moins un canal de la seconde bande de fréquences, ou les deux, à un instant postérieur à l'instant spécifique lorsque l'au moins un canal n'est occupé ni par le premier signal radio ni par le second signal radio à l'instant spécifique ;
dans lequel les M canaux sélectionnés sont consécutifs dans la seconde bande de fréquences ; et
dans lequel, tout en utilisant certains canaux pour transmettre le premier signal radio, l'unité de transmission de signaux radio est configurée pour redéterminer si un autre canal précédemment utilisé dans la seconde bande de fréquences est disponible et pour utiliser l'autre canal pour transmettre le premier signal radio.

2. Appareil de transmission de signaux radio (100) selon la revendication 1, dans lequel
la seconde largeur de bande de fréquences maximale est de 20 mégahertz,
la seconde bande de fréquences est une bande de 5 gigahertz sans licence, et
le second signal radio est transmis dans la seconde bande de fréquences par un procédé d'accès multiple par détection de porteuse (CSMA).

3. Appareil de transmission de signaux radio (100) selon la revendication 1, dans lequel
l'unité de détermination de canal disponible (120) est configurée pour déterminer simultanément si les M canaux sont occupés ou non par le premier signal radio ou le second signal radio à l'instant spécifique, et
l'unité de transmission de signaux radio est configurée pour transmettre le premier signal radio à l'instant postérieur à l'instant spécifique à l'appareil de réception de signaux radio (200) par agrégation de porteuses de la première bande de fréquences et des M canaux, lorsque les M canaux ne sont occupés ni par le premier signal radio ni par le second signal radio à l'instant spécifique.

4. Appareil de transmission de signaux radio (100) selon la revendication 1, dans lequel
lorsque le premier signal radio a manqué d'utiliser l'au moins un canal, l'unité de détermination de canal disponible (120) est configurée pour déterminer si l'au moins un canal est occupé par le premier signal radio ou le second signal radio après une période de détermination de canal disponible prédéfinie.

5. Appareil de transmission de signaux radio (100) selon la revendication 1, dans lequel
lorsque le premier signal radio doit utiliser de façon successive ou par intermittence le même canal que celui qui a été précédemment utilisé pour transmettre le premier signal radio, l'unité de détermination de canal disponible (120) est configurée pour déterminer si l'au moins un canal est utilisé par le premier signal radio ou le second signal radio à l'instant spécifique après un temps d'utilisation de canal prédéfini.

6. Appareil de transmission de signaux radio (100) selon la revendication 1, comprenant en outre :
une unité de programmation de ressources radio configurée pour programmer un bloc de ressources sur la base d'états d'une pluralité de canaux de la première bande de fréquences ou de la pluralité de canaux de la seconde bande de fréquences, ou des deux.

7. Appareil de transmission de signaux radio (100) selon la revendication 6, dans lequel
lorsque le premier signal radio doit utiliser successivement le même canal que celui utilisé pour la transmission du premier signal radio, l'unité de détermination de canal disponible (120) est configurée pour informer l'unité de programmation de ressources radio de l'état de l'au moins un canal.

8. Appareil de transmission de signaux radio (100) selon la revendication 1, dans lequel l'unité de transmission de signaux radio est configurée pour transmettre le premier signal radio à l'instant postérieur à l'instant spécifique à l'appareil de réception de signaux radio (200) par agrégation de porteuses de la première bande de fréquences ou de l'au moins un canal, ou des deux.

9. Appareil de transmission de signaux radio (100) selon la revendication 1, dans lequel l'unité de transmission de signaux radio est configurée pour transmettre le premier signal radio à l'appareil de réception de signaux radio (200) en utilisant la première bande de fréquences ou une sous-porteuse de l'au moins un canal, ou les deux.

10. Procédé de transmission, par un appareil de transmission de signaux radio (100), d'un signal radio, pour utiliser une première bande de fréquences ou une seconde bande de fréquences, ou les deux, tout en évitant des interférences entre un premier signal radio qui est un signal de communication mobile de quatrième génération ou un signal de communication mobile de cinquième génération ayant une première largeur de bande de fréquences maximale, et un second signal radio qui est un signal d'accès sans fil (WiFi) ayant une seconde largeur de bande de fréquences maximale, dans lequel la première largeur de bande de fréquences maximale est plus large que la seconde largeur de bande de fréquences maximale ou égale à celle-ci, le procédé comprenant de :
sélectionner, parmi une pluralité de canaux dans la seconde bande de fréquences, M canaux qui composent au moins une partie de la première largeur de bande de fréquences maximale, dans lequel M est un entier naturel ;
déterminer de manière simultanée ou de manière non simultanée si au moins un canal parmi les M canaux est occupé par le premier signal radio ou le second signal radio à un instant spécifique ; et
transmettre le premier signal radio à un appareil de réception de signaux radio (200) en utilisant la première bande de fréquences ou l'au moins un canal de la seconde bande de fréquences, ou les deux, à un instant postérieur à l'instant spécifique lorsque l'au moins un canal n'est occupé ni par le premier signal radio ni par le second signal radio à l'instant spécifique ;
dans lequel les M canaux sélectionnés sont consécutifs dans la seconde bande de fréquences ; et
dans lequel le procédé comprend en outre l'étape consistant à redéterminer, tout en utilisant certains canaux pour transmettre le premier signal radio, si un autre canal précédemment utilisé dans la seconde bande de fréquences est disponible et utiliser l'autre canal pour transmettre le premier signal radio.

11. Procédé selon la revendication 10, comprenant en outre de :
lorsque le premier signal radio a manqué d'utiliser l'au moins un canal, déterminer si l'au moins un canal est occupé par le premier signal radio ou le second signal radio à l'instant spécifique après une période de détermination de canal disponible prédéfinie.

12. Procédé selon la revendication 10, comprenant en outre de :
lorsque le premier signal radio doit utiliser de façon successive ou par intermittence le même canal que celui utilisé pour transmettre le premier signal radio, déterminer si l'au moins un canal est occupé par le premier signal radio ou le second signal radio après un temps d'utilisation de canal prédéfini.

13. Procédé selon la revendication 11, comprenant en outre de :
lorsque l'au moins un canal n'est occupé ni par le premier signal radio ni par le second signal radio, transmettre le premier signal radio à l'appareil de réception de signaux radio (200) en utilisant le premier signal radio ou l'au moins un canal, ou les deux.
